# EUROPEAN PATENT SPECIFICATION

(11) **EP 1 738 853 B1**
(45) Date of publication and mention of the grant of the patent: **09.05.2012**
(21) Application number: 05726710.6
(22) Date of filing: 17.03.2005
(51) Int. Cl.: B23K 9/127, B23K 9/095, B23K 9/10

(54) **WELDING APPARATUS WITH A ROBOT AND A CONTROLLER**
SCHWEISSGERÄT MIT EINEM ROBOTER UND EINER STEUEREINRICHTUNG
APPAREIL DE SOUDAGE AVEC UN ROBOT ET UN CONTRÔLEUR

(30) Priority: 26.03.2004 JP 2004091457
(43) Date of publication of application: 03.01.2007
(73) Proprietor: Panasonic Corporation, Kadoma-shi Osaka 571-8501 (JP)
(72) Inventor: AIMI, Kei, Osaka 573-9164 (JP); OYAMA, Hidetoshi, Osaka 563-0021 (JP); MUKAI, Yasushi, Osaka 534-0016 (JP); TAKAHASHI, Wataru, Osaka 555-0033 (JP); KOWA, Masaru, Osaka 564-0062, (JP)
(74) Representative: Grünecker, Kinkeldey, Stockmair & Schwanhäusser
(86) International application number: PCT/JP2005/004786
(87) International publication number: WO 2005/092553

(56) References cited:
- EP-A- 1 378 310
- JP-A- 4 322 881
- JP-A- 6 055 269
- JP-A- 58 035 065
- JP-A- 59 097 770
- JP-A- 61 238 469
- JP-A- 63 097 367
- JP-A- 2000 288 732
- US-A- 4 485 293
- US-B1- 6 388 233

## Description

The present invention relates to a welding apparatus capable of detecting contact between a welding wire and a wielding object according to the preamble of claim 1 (see, for example, JP 04322881 A).
JP 04322881 A discloses a welding apparatus comprising an output control unit for controlling electric power to be supplied to a welding wire and a welding object; a wielding voltage detection unit for detecting a welding voltage; a welding current detection unit for detecting a welding current; and a contact determination unit to which a signal from at least one of the welding voltage detection unit and the welding current detecting unit is inputted and which determines contact between the welding wire and the welding object, wherein the output control unit outputs electric power corresponding to a condition of at least one of the welding object and the welding wire as electric power for contact determination.
JP 59097770 A describes a device for a preventive short circuit of an electrode. Said document discloses a welding current detecting relay and a relay for stopping the power source.
EP 1 378 310 A describes a welding method, a welding device, a welded joint and a welded structure. As soon an the welding begins, the voltage detector and the current detector detect an actual voltage and actual current in the cable respectively.
US 4,485,293 A discloses a short circuit transfer arc welding machine.
JP 2000 288732 A discloses a welding apparatus comprising an output control unit for controlling electric power to be supplied to a welding wire and a welding object; a welding voltage detection for detecting a welding current; and a contact determination unit to which a signal from at least one of the welding voltage detection unit and the welding current detecting unit is inputted and which determines contact between the welding wire and the welding object, wherein the output control unit outputs electric power corresponding to a condition of at least one of the welding object and the welding wire as electric power for contact determination.
JP 61 238469 refers to a short circuit and arc discriminating method in consumable electrotype arc welding. Said document discloses an output control unit for controlling electric power to be supplied to a welding wire and a welding object, a welding voltage detection unit, a welding current detection unit and a contact determination unit wherein the output control unit outputs electric power corresponding to a condition of at least one of the welding object and the welding wire as electric power for contact determination.
US 6,388,233 B1 relates to a method and an apparatus for arc welding with melting electrode. Said document discloses an output control unit, a welding voltage detection unit, a welding current detection unit and a contact determination unit wherein the output control unit outputs electric power corresponding to a condition of at least one of the welding object and the welding wire as electric power for contact determination.

In recent years, automation of the welding operation is being promoted for a welding apparatus by being combined with a robot, as can be seen in the automobile industry and the like.

When effect robot welding, since the positioning of the robot with respect to a welding object (hereafter referred to as the base metal) becomes important, a contact detecting device (touch sensor) is used which detects that the welding wire has come into contact with the base metal, and effects positioning or position correction with respect to a welding start point on the basis of information on the robot position at that time.

For this reason, the welding apparatus having the contact detecting device or a contact detecting function, upon detecting the contact between the welding wire and the base metal, outputs a contact signal to the outside.

As such a welding apparatus, one is known which is so configured that a power supply unit for contact detection and a welding power supply unit are used in common (e.g., refer to patent document 1).
Patent document 1: JP-A-2001-121264

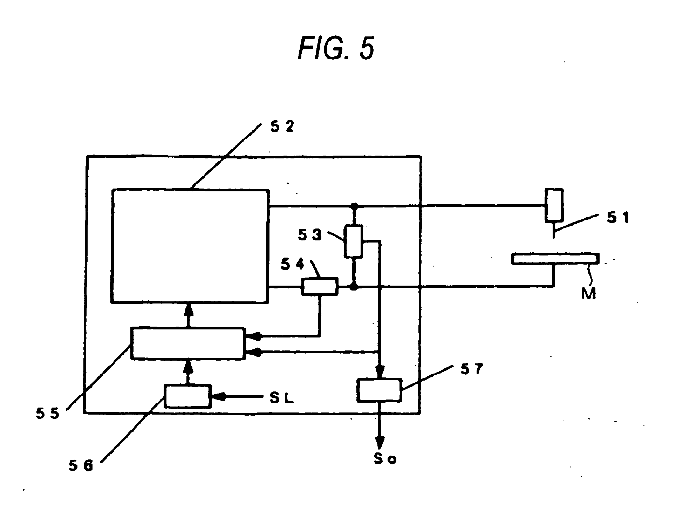

Fig. 5 shows the above-described conventional welding apparatus, in which reference numeral 51 denotes a welding wire; 52, an output control circuit unit for controlling a welding current or welding electric power to be supplied between the welding wire 51 and a base metal M; 55, an output command unit for imparting an appropriate output command to the output control circuit unit 52; 53, a welding voltage detection unit for detecting the welding voltage between the welding wire 51 and the base metal; 54, a welding current detection unit for detecting the outputted welding current; 56, a welding/detection changeover means for effecting a changeover between the welding operation and the detecting operation; and 57, a contact determining unit for detecting contact between the welding wire 51 and the base metal M.

A description will be given of the welding apparatus configured as described above.

In the case where contact between the welding wire 51 and the base metal M is detected, a contact detection output value for detection is imparted to the output command unit 55 by the welding/detection changeover means 56, and predetermined electric power at the time of detection is applied between the welding wire 51 and the base metal through the output control circuit unit 52.

The contact determining unit 57 detects the welding voltage detected by the welding voltage detection unit 53. When contact between the welding wire 51 and the base metal M occurs, the voltage detected by the welding voltage detection unit 53 drops. As a result of the drop of the voltage, the contact determining unit 57 detects the state of contact, and outputs a contact signal So to the outside.

However, with the conventional welding apparatus, in a case where a black scale or an oil film is adhered in the surface condition of the welding object, conductivity during contact becomes poor, so that there has been a need to apply a high voltage.

In addition, there has been a problem in that in a case where the diameter of the welding wire is small, if a high voltage is applied, the tip of the wire undergoes deformation due to fusion or rupture at the time of the contact, and accuracy in the positioning or position correction of the robot declines due to a change in the projecting length of the welding wire.

An object of the invention is to provide a welding apparatus which supplies electric power corresponding to the condition of at least one of the welding object and the welding wire.
The above and other objects of the invention are achieved by a welding apparatus according to claim 1. Preferred embodiments are claimed in the dependent claims.

Further, by virtue of the configuration according to claim 1, the welding apparatus in accordance with the invention makes it possible to output electric power corresponding to the condition of at least one of the welding object and the welding wire as electric power for contact determination, so that it is possible to prevent the deformation and the like of the welding wire during contact.

By virtue of the configuration according to claim 2, it is possible to easily set the output of electric power corresponding to the condition of at least one of the welding object and the welding wire.

Further, by virtue of the configuration according to claim 3, it is possible to shut off the output current flowing through the welding wire and the welding object immediately after the contact determination.

By virtue of the configuration according to claim 4, it is possible to apply a voltage higher than the voltage which can be outputted by the welding apparatus, so that it is possible to improve the accuracy of contact detection.

As described above, in accordance with the invention, it is possible to output electric power corresponding to the condition of at least one of the welding object and the welding wire as electric power for contact determination.
For this reason, it is possible to provide a welding apparatus which is capable of coping with the conditions of various welding wires and welding objects, of preventing the deformation and the like of the welding wire during contact between the welding wire and the welding object, of improving the accuracy in the robot positioning or position correction during welding, and of enabling high-quality robot welding.

Fig. 1 is a diagram illustrating an overall configuration in a first example of the welding apparatus which does not form part of the invention, but is useful for the understanding of the invention.
Fig. 2 is a diagram illustrating an overall configuration in an embodiment of the welding apparatus in accordance with the invention;
Fig. 3 is a diagram illustrating an overall configuration in a second example of the welding apparatus which does not form part of the invention, but is useful for the understanding of the invention;
Fig. 4 is a diagram illustrating an overall configuration in a third example of the welding apparatus which does not form part of the invention, but is useful for the understanding of the invention; and
Fig. 5 is a diagram illustrating a configuration in a conventional welding apparatus.

### (First Example)

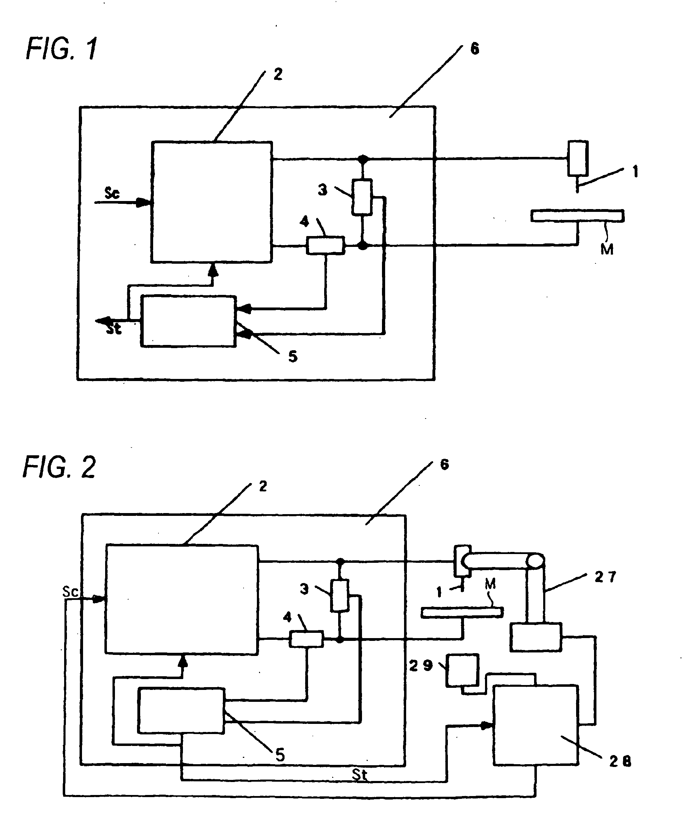

In Fig. 1, reference numeral 1 denotes a welding wire; 2, an output control unit for outputting electric power between the welding wire 1 and a base metal M; 3, a welding voltage detection unit for detecting a voltage applied between the welding wire 1 and the base metal M on the basis of the electric power outputted by the output control unit 2; 4, a welding current detection unit for detecting a current applied between the welding wire 1 and the base metal M on the basis of the electric power outputted by the output control unit 2; 5, a contact determination unit for determining contact between the welding wire 1 and the base metal M by inputting a signal from at least one of the welding voltage detection unit 3 and the welding current detection unit 4.

A description will be given of the operation of the welding apparatus configured as described above.

First, in a case where the contact between the welding wire 1 and the base metal M is detected, the output control unit 2 outputs electric power corresponding to the condition of at least one of the base metal and the welding wire in response to a state signal Sc. Before the welding wire 1 and the base metal contact each other, the welding voltage detection unit 3 detects a high voltage with an output end in a no-load state. At this time, the welding current detection unit 3 detects only a very small current due to such as a leakage current of the circuit.

Next, when the welding wire 1 and the base metal come into contact with each other, owing to the electric power outputted by the output control unit 2, a current corresponding to the electric power applied to the welding wire 1 and the base metal flows, and the voltage between the welding wire 1 and the base metal drops appreciably.

In addition, a value in which the welding voltage value detected by the welding voltage detection unit 3 is divided by the welding current value detected by the welding current detection unit 4, i.e., a resistance value at the output end, also shows an appreciable drop.

The contact determination unit 5 detects the contact between the welding wire 1 and the base metal on the basis of any one of the case where the amount of change in the detected welding voltage value is greater than a predetermined value, or the welding voltage value has dropped below a predetermined level, the case where the amount of change in the detected welding current value is greater than a predetermined value, or the welding current value has exceeded a predetermined level, and the case where the amount of change in the resistance value obtained from the detected voltage value and the voltage value is greater than a predetermined value, or the resistance value has dropped below a predetermined level. The contact determination unit 5 outputs the same as a contact signal St to the output control unit 2 and the outside. When the contact signal St is turned ON, the output control unit 2 stops the power output between the welding wire 1 and the base metal to prevent the fusion and deformation of the welding wire 1 and the base metal.

An external apparatus (e.g., an industrial robot) or the like fetches position information at a point of time when the contact signal St of the contact determination unit 5 is turned ON, and the external apparatus or the like effects the positioning or position correction of a welding start point on the basis of that information, and carries out the welding operation along a desired welding path.

In addition, in a case where the state of conductivity during the contact between the welding wire 1 and the base metal is poor due to the adhesion of such as a black scale or an oil film, the amount of energization during contact becomes small. For this reason, higher electric power is imparted by the output control unit 2 in correspondence with the condition of the base metal by means of the state signal Sc, thereby making it possible to ensure similar contact determination accuracy with respect to a base metal whose surface condition is poor.

Furthermore, in a case where the welding wire 1 is extremely slender, there is a possibility of the welding wire 1 undergoing deformation such as fusion during the contact between the welding wire 1 and the base metal. For this reason, lower electric power is imparted by the output control unit 2 in correspondence with the condition of the welding wire 1 by means of the state signal Sc, thereby making it possible to prevent the deformation of the welding wire 1 during contact.

As described above, as electric power corresponding to the condition of at least one of the base metal and the welding wire 1 is outputted as the electric power for contact determination to detect contact, it is possible to correctly detect the state of contact irrespective of the condition of the base metal or the welding wire 1.

### (Embodiment of the invention)

In this embodiment, the same arrangements as those of the first example will be denoted by the same reference numerals, and a detailed description thereof will be omitted. In Fig. 2, reference numeral 27 denotes a robot which moves the welding wire to a predetermined welding portion; 28, a robot controller for controlling the robot; and 29, an input device for effecting the manual operation of the robot 27 or such as the preparation of a teaching program for the robot 27. The difference with the first example lies in that the input device 29 is connected to a welding device 6 through the robot controller 28.

A description will be given of the operation of the welding apparatus configured as described above.

First, a welding operation teaching program for the robot 27 is prepared by using the input device 29. At that juncture, the teaching program is prepared such that the state signal Sc is outputted for outputting electric power corresponding to the condition of at least one of the welding wire 1 and the base metal at the place where the contact detection is carried out.

During the welding operation, the state signal Sc set by the input device 29 is outputted to the output control unit 2 through the robot controller 28 at the place of contact detection in accordance with the teaching program. The output control unit 2 outputs electric power corresponding to the inputted state signal Sc, and the contact determination unit 5 detects contact between the welding wire 1 and the base metal on the basis of the signal from at least one of the welding voltage detection unit 3 and the welding current detection unit 4, and outputs the contact signal St.

The robot controller 28 fetches the position information of the robot 27 at a point of time when the contact signal of the contact determination unit 5 is turned ON, and the robot controller 28 effects the positioning or position correction of the welding start point on the basis of that information, and carries out the welding operation along a desired welding path.

It should be noted that although in this embodiment the state signal Sc is outputted by preparing a teaching program, the state signal Sc may be outputted to the output control unit 2 through the robot controller 28 by operating the input device 29.

As described above, as the output electric power during the contact detection by the output control unit 2 is designated by the input device 29 connected to the robot controller 28, it is possible to easily effect the setting corresponding to the condition of at least one of the welding wire 1 and the base metal as well as its change.

### (Second Example)

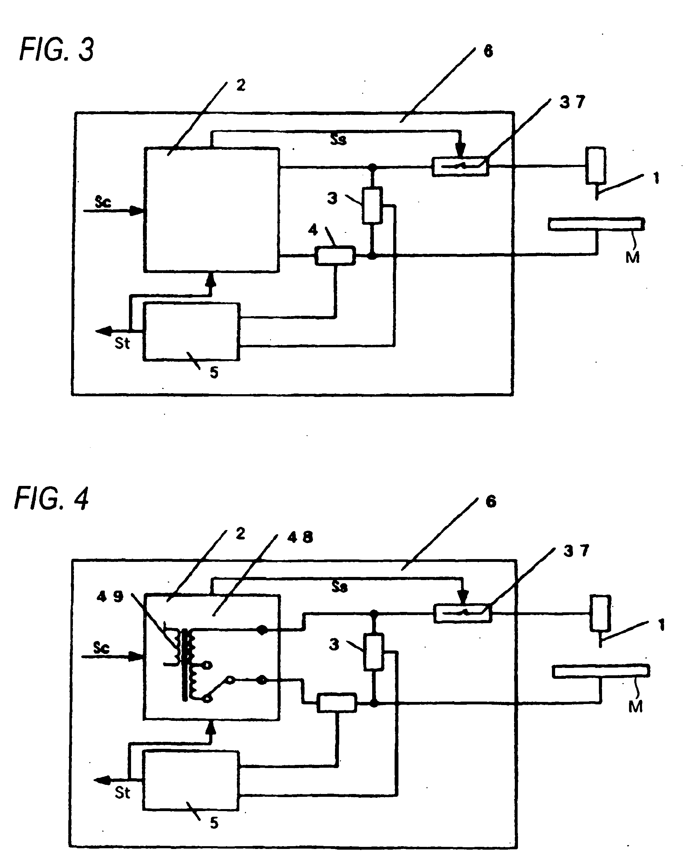

In this example, the same arrangements as those of the first example will be denoted by the same reference numerals, and a detailed description thereof will be omitted. In Fig. 3, reference numeral 37 denotes an output shutoff means for shutting off the electric power outputted by the output control unit 2. The difference with the first example lies in that the output shutoff means 37 is provided between the welding wire 1 or the base metal and the output control unit 2.

A description will be given of the operation of the welding apparatus configured as described above.

The output control unit 2 outputs electric power for contact detection on the basis of the state signal Sc corresponding to the condition of the welding wire 1 or the base metal. The contact determination unit 5 detects the state of contact between the welding wire 1 and the base metal on the basis of the information of at least one of the welding voltage detection unit 3 and the welding current detection unit 4. If the contact is detected, the contact determination unit 5 outputs the contact signal St, and the output control unit 2 stops the output on the basis of that contact signal St and outputs the output shutoff signal Ss to the output shutoff means 37, thereby shutting off the power supply to the welding wire 1 and the base metal.

For example, in a case where the base metal has poor conductivity due to the adhesion of an oil film or the like on its surface, it is necessary for the output control unit 2 to output higher-than-usual electric power and ensure conductivity in order to reliably effect the determination of contact between the welding wire 1 and the base metal. However, since the output control unit 2 is generally provided with a welding transformer for fetching a high current, there is a possibility that a current flows across the welding wire 1 due to the energy built up in the transformer, its peripheral condenser, and the like, possibly causing the deformation of fusion and the like. In such a situation, it is possible to shut off the electric power applied to the welding wire by means of the output shutoff means 37.

It should be noted that although in this example the output shutoff means 37 is provided between the output control unit 2 and the welding wire 1, the output shutoff means may be provided between the output control unit 2 and the base metal.

As described above, by providing the output shutoff means 37, even in the case where high electric power corresponding to the condition of the welding wire or the base metal is outputted from the output control unit 2 during the contact detection, it is possible to prevent the deformation of the welding wire 1 and the base metal.

### (Third Example)

In this example, the same arrangements as those of the second example will be denoted by the same reference numerals, and a detailed description thereof will be omitted. In Fig. 3, reference numeral 48 denotes a high voltage applying means for applying a high voltage between the welding wire 1 and the base metal.

The difference with the second example lies in that the output control unit 2 is provided with the high voltage applying means 48.

A description will be given of the operation of the welding apparatus configured as described above.

In general, the output control unit 2 of the welding device 6 is provided with a welding transformer 49 for outputting a large current. If the turn ratio of the welding transformer 49 is a value of n : 1, it is possible to output a current n-fold the current flowing to the input side of the welding transformer.

However, as for the voltage which can be outputted, the applied voltage becomes 1/n-fold the primary-side voltage of the welding transformer 49 in correspondence with the turn ratio (n : 1) of the welding transformer 49, and the larger the turn ratio, the more the voltage which can be applied between the welding wire 1 and the base metal during the contact detection declines. Here, in a case where an oil film or the like adheres to the base metal surface, it is necessary to cause contact to occur between the welding wire 2 and the base metal by removing the oil film or the like by applying a high voltage.

Accordingly, by changing the turn ratio by changing over the tap of the welding transformer 49 during the contact detection, the high voltage applying means 48 applies between the welding wire 1 and the base metal electric power of a higher voltage than the voltage which can be applied during welding, so as to effect contact detection. Upon detection of contact, the contact determination unit 5 outputs the contact signal S/t, and the output control unit 2 stops the output on the basis of the contact signal St and outputs the output shutoff signal Ss to the output shutoff means 37, thereby shutting off power supply to the welding wire 1 and the base metal. Upon completion of the contact detection operation, the high voltage applying means 48 allows a high current output during welding by returning the tap of the welding transformer 49 to the position for welding.

As described above, by providing the output shutoff means 37 and the high voltage applying means 48, the output control unit 2 of the welding apparatus is capable of outputting electric power of a high voltage in correspondence with the condition of the welding wire or the base metal during the contact detection, and is capable of preventing the deformation of the welding wire 1 and the base metal even when a high voltage is applied.

Although the invention has been described in detail and by referring to specific embodiments, it will be apparent to those skilled in the art that various changes and modifications may be made thereto without departing from the spirit and scope of the invention.
This application is based on Japanese Patent Application filed on March 26, 2004 (Japanese Patent Application No. 2004-91457), the contents of which are incorporated herein by reference.

The welding apparatus in accordance with the invention makes it possible to output electric power corresponding to the condition of at least one of the welding object and the welding wire as electric power for contact determination, and is capable of coping with the conditions of various welding wires and welding objects, and of preventing the deformation and the like of the welding wire during contact between the welding wire and the welding object. Therefore, the welding apparatus using a robot in accordance with the invention is useful not only for the automobile industry but also in the welding field.

## Claims

1. A welding apparatus comprising:
an output control unit (2) for controlling electric power to be supplied to a welding wire (1) and a welding object (M);
a welding voltage detection unit (3) for detecting a welding voltage;
a welding current detection unit (4) for detecting a welding current; and
a contact determination unit (5) to which a signal from at least one of the welding voltage detection unit (3) and the welding current detection unit (4) is inputted and which determines contact between the welding wire (1) and the welding object (M),
wherein the output control unit (2) outputs electric power corresponding to a condition of at least one of the welding object (M) and the welding wire (1) as electric power for contact determination, and **characterised by**
a robot (27) having a controller (28), wherein a state signal (Sc) corresponding to the condition of at least one of the welding object and the welding wire is inputted to the output control unit be either an input device (29) for preparing a teaching program with such state signal or the robot controller (28), wherein the contact determination unit (5) detects contact between the welding wire and the welding object on the basis of the signal from at least one of the welding voltage detection unit (3) and the welding current detection unit (4) and outputs the contact signal (St).

2. The welding apparatus according to claim 1, wherein
the robot (27) moves the welding wire (1) to a desired portion of the welding object (M);
the robot controller (28) controls the motion of the robot (27); and the input device (29) inputs the motion of the robot (27) to the robot controller (28),
wherein the signal for outputting electric power corresponding to the condition of at least one of the welding object (M) and the welding wire (1) as the electric power or contact determination is inputted from the input device (29) to the output control unit (2) via the robot controller (28).

3. The welding apparatus according to claim 1 or 2, wherein output shutoff means (37) is provided between the welding wire (1) or the welding object (M) and the output control unit (2), and the output shutoff means (37) is operated by a signal from the output control unit (2) or the contact determination unit (5).

4. The welding apparatus according to claim 3, wherein high voltage applying means (48) for applying a high voltage between the welding wire (1) and the welding object (M) is provided in the output control unit (2).

5. The welding apparatus according to claim 1, wherein the state signal (Sc) represents a surface condition of the welding object (M).

6. The welding apparatus according to claim 1, wherein the state signal (Sc) represents a size of the welding wire (1).

## Patentansprüche

1. Schweißvorrichtung, die umfasst:
eine Ausgangs-Steuereinheit (2), mit der einem Schweißdraht (1) und einem Schweißobjekt (M) zuzuführende elektrische Leistung gesteuert wird;
eine Schweißspannungs-Erfassungseinheit (3) zum Erfassen einer Schweißspannung;
eine Schweißstrom-Erfassungseinheit (4) zum Erfassen eines Schweißstroms; und
eine Kontakt-Feststelleinheit (5), in die ein Signal von der Schweißspannungs-Erfassungseinheit (3) oder/und der Schweißstrom-Erfassungseinheit (4) eingegeben wird und die Kontakt zwischen dem Schweißdraht (1) und dem Schweißobjekt (M) feststellt,
wobei die Ausgangs-Steuereinheit (2) elektrische Leistung entsprechend einem Zustand der Schweißobjektes (M) oder/und des Schweißdrahtes (1) als elektrische Leistung für Kontakt-Feststellung ausgibt, und
**gekennzeichnet durch**
einen Roboter (27) mit einer Steuereinrichtung (28), wobei ein Status-Signal (Sc), das dem Zustand des Schweißobjektes oder/und des Schweißdrahtes entspricht, entweder durch eine Eingabeeinrichtung (29) zum Erstellen eines Lehrprogramms mit diesem Status-Signal, oder **durch** die Roboter-Steuereinrichtung (28) in die Ausgangs-Steuereinheit eingegeben wird, wobei die Kontakt-Feststelleinheit (5) Kontakt zwischen dem Schweißdraht und dem Schweißobjekt auf Basis des Signals von der Schweißspannungs-Erfassungseinheit (3) oder/und der Schweißstrom-Erfassungseinheit (4) erfasst und das Kontakt-Signal (St) ausgibt.

2. Schweißvorrichtung nach Anspruch 1, wobei
der Roboter (27) den Schweißdraht (1) zu einem gewünschten Abschnitt des Schweißobjektes (M) bewegt;
die Roboter-Steuereinrichtung (28) die Bewegung des Roboters (27) steuert und die Eingabeeinrichtung (29) die Bewegung des Roboters (27) in die Roboter-Steuereinrichtung (28) eingibt,
und das Signal zum Ausgeben elektrischer Leistung, das dem Zustand des Schweißobjektes (M) oder/und des Schweißdrahtes (1) entspricht, als die elektrische Leistung oder Kontakt-Feststellung von der Eingabeeinrichtung (29) über die Roboter-Steuereinrichtung (28) in die Ausgangs-Steuereinheit (2) eingegeben wird.

3. Schweißvorrichtung nach Anspruch 1 oder 2, wobei eine Ausgangs-Sperreinrichtung (37) zwischen dem Schweißdraht (1) oder dem Schweißobjekt (M) und der Ausgangs-Steuereinheit (2) vorhanden ist und die Ausgangs-Sperreinrichtung (37) durch ein Signal von der Ausgangs-Steuereinheit (2) oder der Kontakt-Feststelleinheit (5) betrieben wird.

4. Schweißvorrichtung nach Anspruch 3, wobei eine Hochspannungs-Anlegeeinrichtung (48) zum Anlegen einer Hochspannung zwischen dem Schweißdraht (1) und dem Schweißobjekt (M) in der Ausgangs-Steuereinheit (2) vorhanden ist.

5. Schweißvorrichtung nach Anspruch 1, wobei das Status-Signal (Sc) einen Oberflächenzustand des Schweißobjektes (M) repräsentiert.

6. Schweißvorrichtung nach Anspruch 1, wobei das Status-Signal (Sc) eine Größe des Schweißdrahtes (1) repräsentiert.

## Revendications

1. Appareil de soudage comprenant :
une unité de régulation de sortie (2) pour réguler la puissance électrique destinée à être fournie à un fil de soudage (1) et à un objet de soudage (M) ;
une unité de détection de tension de soudage (3) pour détecter une tension de soudage ;
une unité de détection de courant de soudage (4) pour détecter un courant de soudage ; et
une unité de détermination de contact (5) à laquelle est fourni en entrée un signal provenant d'au moins une unité parmi l'unité de détection de tension de soudage (3) et l'unité de détection de courant de soudage (4) et qui détermine un contact entre le fil de soudage (1) et l'objet de soudage (M),
dans lequel l'unité de régulation de sortie (2) fournit en sortie une puissance électrique correspondant à l'état d'au moins un élément parmi l'objet de soudage (M) et le fil de soudage (1) en tant que puissance électrique pour détermination de contact, et **caractérisé par**
un robot (27) comportant un contrôleur (28), dans lequel un signal d'état (Sc) correspondant à l'état d'au moins un élément parmi l'objet de soudage et le fil de soudage est fourni en entrée de l'unité de régulation de sortie qui est, soit un dispositif d'entrée (29) pour élaborer un programme d'apprentissage avec ce signal d'état, soit le contrôleur du robot (28), dans lequel l'unité de détermination de contact (5) détecte un contact entre le fil de soudage et l'objet de soudage en fonction du signal provenant d'au moins une unité parmi l'unité de détection de tension de soudage (3) et l'unité de détection de courant de soudage (4) et fournit en sortie le signal de contact (St).

2. Appareil de soudage selon la revendication 1, dans lequel
le robot (27) déplace le fil de soudage (1) jusqu'à une partie désirée de l'objet de soudage (M) ;
le contrôleur du robot (28) commande le mouvement du robot (27) ; et le dispositif d'entrée (29) applique le mouvement du robot (27) à l'entrée du contrôleur du robot (28),
dans lequel le signal destiné à fournir en sortie une puissance électrique correspondant à l'état d'au moins un élément parmi l'objet de soudage (M) et le fil de soudage (1) en tant que puissance électrique ou détermination de contact est appliqué du dispositif d'entrée (29) à l'entrée de l'unité de commande de sortie (2) par l'intermédiaire du contrôleur du robot (28).

3. Appareil de soudage selon la revendication 1 ou 2, dans lequel un moyen de coupure de sortie (37) est prévu entre le fil de soudage (1) ou l'objet de soudage (M) et l'unité de régulation de sortie (2), et le moyen de coupure de sortie (37) est actionné par un signal provenant de l'unité de régulation de sortie (2) ou de l'unité de détermination de contact (5).

4. Appareil de soudage selon la revendication 3, dans lequel un moyen d'application de haute tension (48) pour appliquer une haute tension entre le fil de soudage (1) et l'objet de soudage (M) est prévu dans l'unité de régulation de sortie (2).

5. Appareil de soudage selon la revendication 1, dans lequel le signal d'état (Sc) représente l'état de surface de l'objet de soudage (M).

6. Appareil de soudage selon la revendication 1, dans lequel le signal d'état (Sc) représente la taille du fil de soudage (1).
